# FASCICULE DE BREVET EUROPEEN

(11) **EP 0 559 520 B1**
(45) Date de publication et mention de la délivrance du brevet: **14.05.1997**
(21) Numéro de dépôt: 93400452.4
(22) Date de dépôt: 22.02.1993
(51) Int. Cl.: F42C 5/02, F42C 15/32, F16K 17/38

(54) **Vanne de sécurité de type barométrique et dispositif pyrotechnique la comportant**
Barometrisches Sicherheitsventil und einer eine ähnliche pyrotechnische Vorrichtung enthaltender Gegenstand
Safety valve of the barometric type and pyrotechnic device comprising such a valve

(30) Priorité: 02.03.1992 FR 9202460
(43) Date de publication de la demande: 08.09.1993
(73) Titulaire: AEROSPATIALE Société Nationale Industrielle, 75781 Paris Cédex 16 (FR)
(72) Inventeur: Aubret, Jean-Pierre, F-33200 Bordeaux (FR); Barriere, Michel, F-33160 Saint-Medard-en-Jalles (FR)
(74) Mandataire: Rinuy, Santarelli

(56) Documents cités:
- US-A- 1 441 744
- US-A- 3 577 926
- US-A- 3 675 579

## Description

L'invention concerne une vanne de sécurité à commande manométrique (par exemple barométrique), destinée à empêcher toute communication entre une entrée de fluide et une sortie de fluide lorsqu'une pression de référence variable est en dehors d'une plage de valeurs autorisées.

Elle vise en particulier, mais non exclusivement, le cas où l'on cherche à inhiber les effets d'un allumage intempestif d'un inflammateur ou d'une composition pyrotechnique.

Les dispositifs pyrotechniques (inflammateurs ou compositions pyrotechniques) sont connus depuis bien longtemps, et les documents FR-2.616.856 et FR-2.616.857 en décrivent des exemples d'applications, pour le déverrouillage d'un objet avec ou sans éjection, et le cisaillage d'un câble, notamment. De tels dispositifs pyrotechniques peuvent aussi servir à l'allumage de compositions pyrotechniques secondaires.

L'un des risques vis-à-vis desquels on peut chercher à se prémunir est un allumage intempestif d'un tel dispositif pyrotechnique : on cherche pour cela à pouvoir empêcher la propagation des gaz générés par le dispositif pyrotechnique jusqu'à un élément destiné à être déclenché (piston d'éjection, organe de cisaillation, ou tête d'allumage de composition pyrotechnique secondaire, si l'on reprend les exemples précités).

Les dispositifs de sécurité proposés à cet effet comportent une pièce d'armement mobile, le plus souvent en basculement ou en rotation, dont la position détermine si la propagation des gaz est permise ou non.

Dans une première catégorie, la commande en mouvement de la pièce d'armement se fait grâce à un stockage d'énergie sous forme élastique (ressort, barre de torsion ...) et des liaisons mécaniques. Outre la nécessité de prévoir ce stockage d'énergie, les dispositifs de sécurité de cette première catégorie ont pour inconvénient d'être violables, puisqu'un accès à certains au moins des éléments mécaniques doit être permis. De tels dispositifs à commande mécanique sont notamment utilisés dans ce que l'on appelle "boîtiers d'armement pyrotechnique".

Dans une autre catégorie, l'armement est provoqué par un moteur électrique, ce qui suppose l'existence d'une source de puissance électrique. L'armement se fait par exemple par commande en rotation, sur 90°, d'un verrou.

On appréciera que ces dispositifs de sécurité nécessitent, pour être armés ou au contraire désarmés, des interventions extérieures dont les causes peuvent être tout à fait quelconques.

En fait, une cause extérieure susceptible de justifier un armement ou un désarmement d'un dispositif de sécurité pour dispositif pyrotechnique est apparu être la pression extérieure, ou du moins la pression d'un milieu de référence.

C'est ainsi par exemple que, lorsque le dispositif pyrotechnique est destiné à fonctionner à haute altitude, voire dans le vide spatial (sur des lanceurs, des fusées sondes, sur des satellites ou autres véhicules spatiaux), la pression extérieure environnante doit être normalement très inférieure à la pression atmosphérique : on peut donc prévoir d'inhiber toute propagation de gaz provenant du dispositif pyrotechnique tant que la pression extérieure est supérieure à un seuil maximal, correspondant par exemple à environ 0,5 bar : cela permet de se garantir contre les conséquences néfastes de tout allumage intempestif au sol du dispositif pyrotechnique. On aboutit ainsi à l'idée d'une sécurité de type barométrique ou manométrique, propre à inhiber toute propagation lorsqu'une pression de référence est en dehors d'une plage de valeurs autorisées (le terme "barométrique" est ici utilisé pour traduire le fait que la pression de référence est la pression extérieure ambiante, qui vaut environ 1 bar au niveau du sol, tandis que le terme "manométrique" n'impose aucune condition quant à l'ordre de grandeur de la pression de référence).

De tels dispositifs de sécurité de type barométrique, notamment pour dispositif pyrotechnique, semblent avoir été déjà envisagés, mais à la connaissance des inventeurs, ces dispositifs de sécurité auraient notamment pour inconvénients d'être mécaniquement complexes (donc peu fiables), lourds et encombrants et surtout d'être irréversibles, c'est-à-dire que la pièce d'armement aurait une position nominale, et une seconde position dans laquelle elle pourrait venir pour certaines valeurs de la pression de référence sans qu'il soit prévu qu'elle puisse revenir dans la position nominale.

Par ailleurs, on connaît de par le document US-A-3.675.579 un dispositif de sécurité et d'armement, commandé par pression, comportant un plateau tournant muni de détonateurs primaires dont la position angulaire vis-à-vis d'un plateau fixe, muni d'éléments d'amorçage de détonation, est définie, grâce à une liaison hélicoïdale, par la position axiale d'un disque monté coulissant dans un cylindre dont le plateau fixe forme un fond et dont l'autre fond comporte une saillie tubulaire formant prise d'air. Un soufflet relie le disque coulissant à cet autre fond, d'où un coulissement étanche de ce disque dans le cylindre. Un élément de rappel élastique est interposé entre cet autre fond et le disque coulissant. Un tel dispositif est reversible mais reste complexe (réglage du rappel élastique, obligation de convertir une translation en rotation, embrayage temporiseur pour lisser les à-coups ... ; par ailleurs, il ne décrit ni ne suggère comment connecter, ou non, des orifices d'entrée et de sortie de gaz : il n'est donc pas une vanne applicable à des systèmes pyrotechniques.

L'invention a pour objet un dispositif (ou vanne) de sécurité à armement manométrique, notamment pour dispositif pyrotechnique, qui réponde aux exigences suivants :
- fonctionner sans apport d'énergie extérieure (mécanique ou électrique),
- être autonome et inviolable, pouvant s'intégrer complètement dans le corps du dispositif de sécurité,
- être simple et fiable grâce à un nombre de pièces mécaniques distinctes aussi faible que possible,
- être réversible (pouvoir passer de sa position nominale de sécurité à sa position d'armement et réciproquement),
- être insensible aux pannes amont (quelles que soient les sollicitations, le dispositif doit toujours revenir en position de sécurité tant que la pression de référence n'est pas dans la plage de valeurs autorisées),
- avoir une durée de vie très grande (la mise sous pression de la capsule à 1 bar ne doit pas poser de problème d'étanchéité au cours du temps),
- être applicable aux systèmes pyrotechniques,
- pouvoir fonctionner en dépression,
- pouvoir fonctionner en surpression (par exemple dans le cas d'un avion qui lache une torpille et qui doit s'armer à une certaine hauteur automatiquement).

Pour ce faire, l'invention tire profit d'une capsule manométrique connue en soi formée d'un soufflet fermé à ses extrémités, qui s'allonge ou se raccourcit en fonction de la différence entre les pressions régnant à l'intérieur et à l'extérieur de ce soufflet, et prévoit de commander l'armement ou le désarmement du dispositif de sécurité grâce au mouvement d'une pièce d'armement directement attelée à ce soufflet. Il en résulte que le nombre de pièces mobiles est très faible et que le mouvement de la pièce d'armement est réversible puisque la déformation du soufflet l'est. On ne trouve pas de telle capsule manométrique dans le document US-A-3.675.579 puisque le soufflet y est ouvert.

Plus précisément, l'invention propose une vanne de sécurité comportant :
- un corps de vanne dans lequel sont ménagés une chambre cylindrique ayant un premier axe, munie d'un fond transversal et communiquant avec l'extérieur du corps par une lumière proche de ce fond, un canal de section constante parallèle au fond transversal, ayant un second axe interceptant au moins approximativement le premier axe, et s'étendant depuis cet axe jusqu'à une portée périphérique orientée vers le premier axe, communiquant au delà de cette partie périphérique avec un orifice d'entrée de gaz, et dans lequel débouche entre cette portée périphérique et le premier axe un canal transversal de sortie de gaz, et un alésage s'étendant parallèlement au premier axe à partir du fond transversal jusqu'au delà du canal,
- un capsule manométrique déformable formée d'un soufflet coaxial à la chambre cylindrique et fermé de manière étanche, en enfermant une masse de gaz donnée, par une première bride fixée dans la chambre cylindrique à distance du fond transversal, et par une seconde bride en regard de ce fond transversal, mobile parallèlement au premier axe, et auquel est fixé un coulisseau adapté à coulisser dans l'alésage et à empiéter dans au moins une partie prédéterminée de l'intersection alésage/canal pour un premier groupe de positions de la bride mobile dans la chambre et à dégager au contraire cette partie prédéterminée de l'intersection alésage/canal dans au moins une autre position de la bride mobile,
- un verrou s'étendant dans le canal entre la portée périphérique et l'alésage, en étant maintenu par le coulisseau dans une configuration isolant le canal transversal de sortie vis à vis de l'orifice d'entrée de gaz, lorsque la bride mobile est dans l'une des positions dudit premier groupe de positions, ce verrou ayant une extrémité arrière adaptée par sa forme à pénétrer, lorsque la bride mobile est dans ladite autre position, dans ladite partie prédéterminée de l'intersection alésage/canal sur une distance au moins égale à l'écart entre le canal transversal de sortie de gaz et la portée périphérique.

Selon des dispositions préférées de l'invention, éventuellement combinées :
- le coulisseau est une plaque transversale au second axe et comportant une lumière adaptée à laisser dégagée ladite partie prédéterminée de l'intersection alésage/canal et à être traversée par l'extrémité arrière du verrou,
- cette lumière a la même forme et la même section que le canal,
- le canal et le verrou et la portée périphérique sont circulaires,
- la bride mobile est, dans ladite autre position laissant dégagée ladite partie prédéterminée de l'intersection alésage/canal, en appui contre le fond transversal,
- la bride mobile est, dans ladite autre position laissant dégagée ladite partie prédéterminée de l'intersection alésage/canal, en appui par sa périphérie contre une portée faisant face audit fond,
- le coulisseau est une plaque pleine adaptée à dégager l'intersection alésage/canal lorsque ladite autre position de la bride mobile est une position rétractée,
- la bride mobile admet, parmi les positions du premier groupe, une position pour laquelle la masse de gaz contenue dans la capsule est à une pression de 1 bar,
- une butée est disposée à l'intérieur de la capsule manométrique déformable, entre lesdites brides,
- dans le coulisseau est ménagé un lamage adapté à recevoir, dans l'une des positions du premier groupe, l'extrémité arrière du verrou tout en maintenant l'isolation entre le canal de sortie et l'orifice d'entrée.

L'invention propose également un dispositif à commande pyrotechnique comportant un élément pyrotechnique muni d'une chambre de génération de gaz, une chambre de réception de gaz et, entre ces chambres, une vanne de sécurité comportant :
- un corps de vanne dans lequel sont ménagés une chambre cylindrique ayant un premier axe, munie d'un fond transversal et communiquant avec l'extérieur du corps par une lumière proche de ce fond, un canal de section constante parallèle au fond transversal, ayant un second axe interceptant au moins approximativement le premier axe, et s'étendant depuis cet axe jusqu'à une portée périphérique orientée vers le premier axe, communiquant au delà de cette partie périphérique avec un orifice d'entrée de gaz, et dans lequel débouche entre cette portée périphérique et le premier axe un canal transversal de sortie de gaz, et un alésage s'étendant parallèlement au premier axe à partir du fond transversal jusqu'au delà du canal,
- un capsule manométrique déformable formée d'un soufflet coaxial à la chambre cylindrique et fermé de manière étanche, en enfermant une masse de gaz donnée, par une première bride fixée dans la chambre cylindrique à distance du fond transversal, et par une seconde bride en regard de ce fond transversal, mobile parallèlement au premier axe, et auquel est fixé un coulisseau adapté à coulisser dans l'alésage et à empiéter dans au moins une partie prédéterminée de l'intersection alésage/canal pour un premier groupe de positions de la bride mobile dans la chambre et à dégager au contraire cette partie prédéterminée de l'intersection alésage/canal dans au moins une autre position de la bride mobile,
- un verrou s'étendant dans le canal entre la portée périphérique et l'alésage, en étant maintenu par le coulisseau dans une configuration isolant le canal transversal de sortie vis à vis de l'orifice d'entrée de gaz, lorsque la bride mobile est dans l'une des positions dudit premier groupe de positions, ce verrou ayant une extrémité arrière adaptée par sa forme à pénétrer, lorsque la bride mobile est dans ladite autre position, dans ladite partie prédéterminée de l'intersection alésage/canal sur une distance au moins égale à l'écart entre le canal transversal de sortie de gaz et la portée périphérique.

Des objets, caractéristiques et avantages de l'invention ressortent de la description qui suit, donnée à titre d'exemple non limitatif, en regard des dessins annexés sur lesquels :
- la figure 1 est une vue en coupe axiale d'un dispositif de sécurité barométrique conforme à l'invention, en configuration désarmée,
- la figure 2 est une vue en coupe axiale du dispositif de la figure 1 en configuration armée,
- la figure est une vue en coupe axiale d'un dispositif pyrotechnique muni d'un dispositif de sécurité conforme aux figures 1 et 2,
- la figure 4 en est une vue en coupe transversale selon la ligne IV-IV de la figure 3,
- la figure 5 est une vue schématique partielle en coupe d'une variante de réalisation,
- la figure 6 est une demi-vue d'un autre dispositif de l'invention, en coupe parallèlement à l'axe de son soufflet et perpendiculairement à l'axe de son verrou, et
- la figure 7 est une vue similaire à celle de la figure 3, d'encore une autre variante de réalisation.

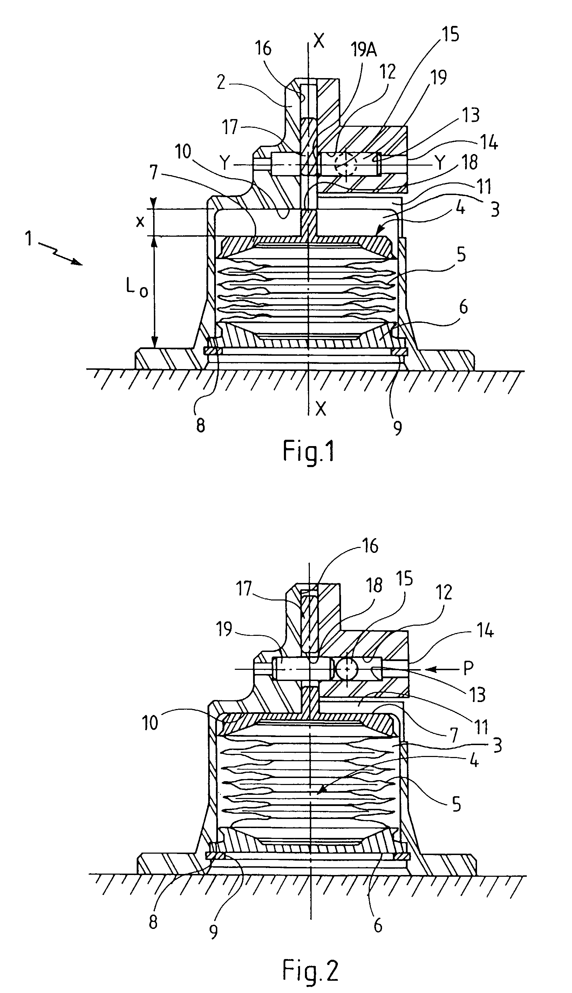

Les figures 1 et 2 représentent un dispositif ou une vanne de sécurité à commande (ou armement) manométrique repérée 1 dans son ensemble.

Ce dispositif 1 comporte un corps 2 comportant une chambre cylindrique 3 d'axe X-X en pratique de section circulaire, dans laquelle est montée une capsule étanche déformable 4.

Cette capsule 4, connue en soi, est formée d'un soufflet 5 fermé à ses extrémités, de façon étanche, par deux brides pleines 6 et 7. Elle contient par exemple de l'air à la pression nominale de 1 bar ce qui, pour une température donnée, détermine pour la capsule 4 une configuration nominale ayant une longueur nominale Lo donnée.

Cette capsule 4 est disposée dans la chambre 3 en sorte d'être coaxiale à celle-ci ; elle est fixée par l'une 6 des brides au corps, ici par coincement de la périphérie de cette bride entre un épaulement 8 du corps et un jonc annulaire de positionnement 9, tandis que l'autre 7 des brides est, dans la configuration nominale, à une distance x d'un fond 10 de la chambre 3, cette distance x déterminant la course maximale autorisée pour cette bride en cas d'allongement de la capsule, parallèlement à X-X.

La capsule 4 a ici sensiblement la même section que la chambre cylindrique 3.

Cette chambre cylindrique 3 communique avec l'extérieur du corps par une lumière 11 ménagée au moins en partie dans le fond 10 (ici radialement) ; cette lumière 11 s'étend en outre, dans l'exemple représenté, sur une partie de la paroi cylindrique du corps entourant la chambre.

On comprendra que la capsule 4 s'allongera ou se rétractera selon que la pression du milieu de référence avec lequel communique la chambre 4 par cette lumière 11 est inférieure ou supérieure à la pression nominale du gaz enfermé dans la capsule.

Derrière le fond 10 est ménagé dans le corps 2 un canal 12 d'axe Y-Y perpendiculaire à l'axe X-X et passant au moins à proximité de celui-ci, comportant une portée annulaire orientée vers l'axe X-X. Au delà de cette portée annulaire 13, le canal 12 communique avec un orifice d'entrée de gaz 14, ici constitué par l'embouchure de ce canal 12 en dehors du corps 2. En deçà de cette portée annulaire 13, c'est-à-dire entre celle-ci et l'axe X-X, ce canal 12 communique avec un canal transversal de sortie de gaz 15.

Dans le fond 10 de la chambre 3 est ménagé un alésage 16 s'étendant parallèlement à l'axe X-X et interceptant le canal 12. Dans cet alésage coulisse un coulisseau 17 solidaire de la bride mobile 7 de la capsule 4.

Dans l'exemple considéré, ce coulisseau est une plaque dans laquelle est ménagée une lumière 18 adaptée à venir en regard du canal pour une configuration donnée de la capsule, de préférence celle où la bride 6 est en appui contre le fond 10 de la chambre 3.

Dans le canal 12, entre la portée annulaire 13 et cette plaque 17 s'étend un verrou mobile 19 adapté à obturer le canal transversal 15 et dont tout recul vis à vis de la portée annulaire 13 est interdit tant que la lumière 18 n'est pas en regard du canal 12. Par contre, l'extrémité arrière 19A du verrou et la lumière 18 sont conformées en sorte que, lorsque celle-ci est en regard du canal, cette extrémité arrière puisse pénétrer au travers de cette lumière 18 sur une distance suffisante pour libérer le canal transversal 15 et le mettre en communication avec l'entrée de gaz 14 (figure 2).

Dans l'exemple représenté, l'extrémité arrière 19A du verrou (et donc la lumière 18) a la même section que le canal 12, grâce à quoi ce verrou présente sur cette extrémité arrière une aire maximale pour son appui contre la plaque 14 lorsque cette plaque est dans une position devant interdire tout recul du verrou. En outre, cette identité de section du verrou sur toute sa longueur (sauf en son extrémité avant, qui est de préférence chanfreinée pour assurer une bonne obturation du canal 12 par appui contre la portée 13) a l'avantage, pour ce verrou, d'une grande simplicité de forme. Bien entendu la plaque 17 (et donc l'alésage 16), de forme rectangulaire, a une largeur (c'est la dimension perpendiculaire au plan des figures 1 et 2) qui est supérieure à celle du canal 12 (comme le canal 12 a en pratique une section circulaire, la largeur de la plaque 17 est supérieure au diamètre du canal).

On appréciera que, dans la configuration de la figure 1, toute arrivée de gaz par l'orifice 14 sera bloquée par le verrou puisque celui-ci ne peut reculer. La sécurité est donc armée (c'est-à-dire effective).

On peut noter que dans cette configuration nominale (égalité des pressions à l'intérieur ou à l'extérieur du soufflet, c'est-à-dire que le dispositif de sécurité est dans un milieu à la pression atmosphérique au sol), le soufflet se comporte mécaniquement comme un ressort, conférant une bonne tenue aux vibrations du dispositif 1.

Lorsque, à partir de cette configuration nominale, on fait baisser la pression extérieure (du fait par exemple d'une augmentation d'altitude), la capsule 4 augmente de volume jusqu'à la venue en butée de la bride 6 contre le fond 10, par exemple pour une pression extérieure de 0,5 bar. Toute diminution supplémentaire de la pression extérieure se traduit par une précontrainte croissante de la bride contre le fond 10, donc par une rigidification croissante de l'ensemble (plaque 17 + reste du corps 2), correspondant à un positionnement amélioré de la lumière 18 dans l'axe du canal 12. Un recul du verrou est donc autorisé, de façon fiable, en cas d'application sur l'extrémité avant du verrou d'une pression de gaz par exemple générée par un inflammateur pyrotechnique.

C'est donc la pression des gaz qui assure le déplacement du verrou si la lumière est en face du verrou.

Si pour une raison quelconque la pression extérieure remonte à la pression initiale (ambiante 1 bar), on réarme automatiquement la sécurité ; le soufflet se rétracte et l'on revient en position sécurité (fonctionnement nominal).

Par exemple, au cours de la mission si le dispositif pyrotechnique n'a pas été utilisé, dans le cas où l'on n'a pas eu besoin de cette fonction (donc pas de mise à feu pyrotechnique), lors du retour au sol de l'aéronef ou du vévicule spatial, la sécurité du dispositif va se réarmer automatiquement et sera toujours active.

Dans le cas d'une condition d'ambiance anormale qui aurait désarmé intempestivement le dispositif (par exemple un choc important), ce dernier se remet en position de sécurité de lui-même car sa position stable est la position de sécurité (réversibilité).

Un tel dispositif peut être conçu :
- soit pour une pression donnée (débattement x fixe - voir figures 1 et 2 - qui correspond à un seuil de pression prédéterminé) ; dans ce cas le corps de la vanne de sécurité est usiné directement en fonction du débattement désiré,
- soit pour une pression réglable (cas non représenté) ; dans ce cas le dispositif est associé à une butée réglable située à l'intérieur du corps de la capsule auprès du fond ; ou alors la zone de fixation de la bride fixe dans la chambre est ajustable axialement.

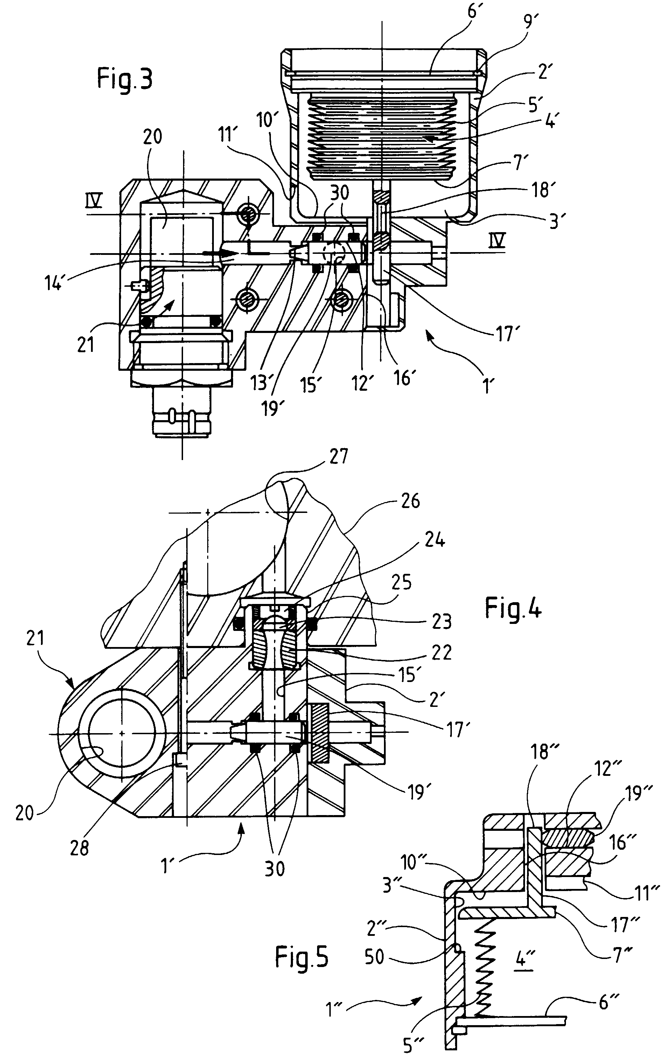

Les figures 3 et 4 montrent un exemple d'application du dispositif de sécurité des figures 1 et 2. Les éléments des figures 1 et 2, qui sont repris dans les figures 3 et 4, y sont désignés par les mêmes chiffres de référence mais affectés d'un indice "prime".

Ainsi qu'il ressort de la figure 3, le dispositif de sécurité 1' communique par son orifice d'entrée de gaz 14' avec la chambre 20 d'un inflammateur pyrotechnique désigné par 21 dans son ensemble, de tout type connu approprié.

Il ressort par contre de la figure 4 que le canal de sortie de gaz 15' est muni d'un col 22 (pour le réglage du débit de gaz ; ce col est en général sonique (Vgaz = Vson)), un opercule claquable 23 (qui libère le passage des gaz à partir d'un seuil de pression) et un écrou 24 (pour le maintien en position de l'opercule et du col). Ce canal 15' débouche d'une saillie 25 du corps 2' du dispositif de sécurité, engagée dans un logement du corps d'un éjecteur, repéré 26 dans son ensemble, dont la chambre de poussée est représentée partiellement sous la référence 27 et fixé au corps 2 par des vis 28. On appréciera que l'étanchéité de l'isolation entre l'orifice 14' et le canal 15' par le verrou 19' est ici renforcée par la présence de joints d'étanchéité 30. L'éjecteur 26 est de tout type connu, par exemple du type décrit dans le document FR-2.616.857 précité.

Il faut noter à propos de la réversibilité (avant la mise à feu pyrotechnique et éjection de l'objet), qu'on n'en a pas besoin si tout fonctionne normalement ; elle est seulement utile si l'engin se trouve en difficulté ou en situation anormale.

Dans une variante de réalisation, en fonctionnement en surpression, l'augmentation de la pression extérieure entraîne une compression du soufflet. Aussi la lumière sur la plaque formant barrière de sécurité est placée dans une position telle que pour une valeur de seuil de la surpression, elle vienne en face du verrou (ce qui assure la levée de la sécurité) ; on peut même dans ce cas utiliser une plaque pleine sans lumière, dont la tranche libre libère ou obture le canal.

Le fonctionnement est le même qu'en dépression mais avec un déplacement inverse.

La figure 5 est une vue schématique partielle en coupe d'un dispositif de sécurité fonctionnant en surpression : les éléments similaires à ceux des figures 1 et 2 sont affectés d'un indice "seconde". La bride mobile 7'' est de plus grand diamètre que le soufflet 5'' tandis que la chambre 3' comporte une portée 50 sur laquelle la périphérie de cette bride mobile peut venir en butée : la rétraction du soufflet jusqu'à cette venue en butée provoque l'effacement du coulisseau 17'' hors de l'intersection alésage/canal et la tranche libre 18'' de ce coulisseau n'a pas besoin, comme dans les figures 1 et 2, de se refermer sur elle-même jusqu'à former une lumière.

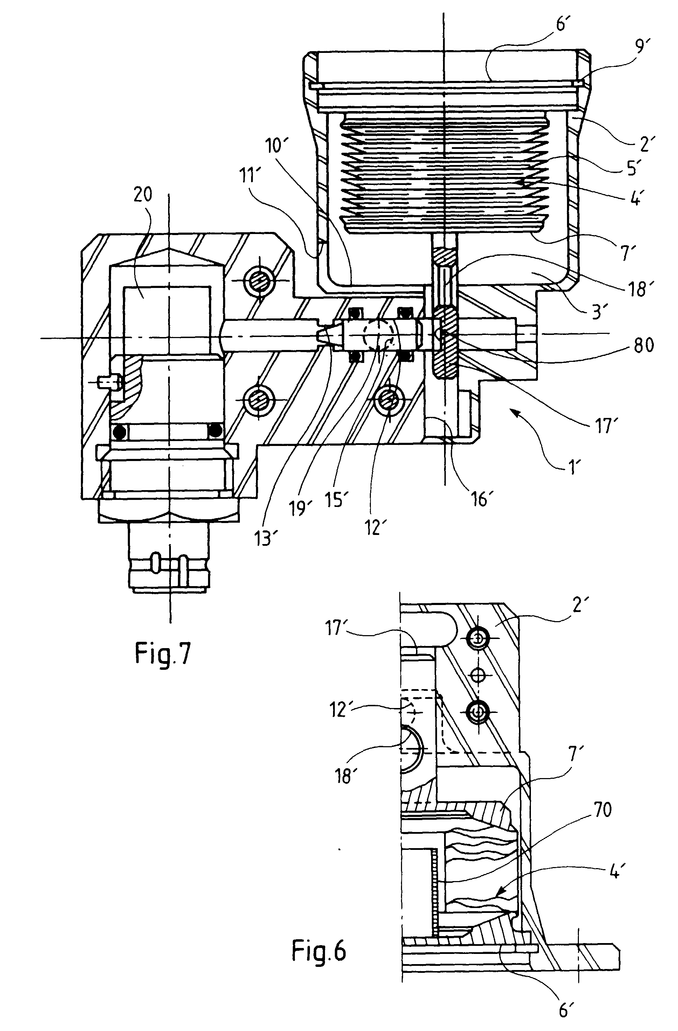

A la figure 6, qui représente un dispositif tout à fait similaire à celui des figures 1 et 2 et dans laquelle le soufflet également est représenté en coupe, on observe l'existence d'une butée interne 60 disposée à l'intérieur de ce soufflet. Celle-ci peut avoir deux fonctions :
- premier cas (fonctionnement en surpression) : la butée limite l'écrasement du soufflet en cas de trop forte surpression, en sorte d'éviter de désactiver la sécurité,
- deuxième cas (fonctionnement en dépression) : la butée permet de précontraindre le soufflet pendant le stockage à la pression ambiante de 1 bar. Dans ce cas, la butée 60 est de longueur supérieure à la hauteur libre du soufflet de sorte que ce dernier, au repos, s'appuie par sa bride mobile sur cette butée. L'effort d'appui introduit une précontrainte qui améliore la tenue aux vibrations.

La figure 7 présente un dispositif très similaire à celui de la figure 3, avec pour seule différence l'existence d'un lamage 80 ménagé dans le coulisseau à l'écart de la lumière 18', de diamètre supérieur ou égal à celui de la partie arrière du verrou. Ce dernier est ainsi emprisonné avec un jeu éventuellement substantiel entre la portée périphérique et le coulisseau.

Ainsi, en cas de déclenchement pyrotechnique intempestif lors du stockage au sol, le verrou 19 viendrait se loger dans le lamage dont la profondeur aura une valeur à bloquer tout mouvement ultérieur du verrou, dans une position interdisant toute circulation de gaz : les gaz d'origine pyrotechnique resteront ainsi confinés dans la chambre 20. En cas de dépressurisation ultérieure, normale en fonctionnement (en vue d'un tir), le coulisseau restera bloqué par le verrou 19 et la sécurité restera alors armée.

A titre d'exemple de réalisation d'un dispositif de sécurité conforme aux figures 1 et 2 :
- le soufflet est du type vendu par la Société CALLISTO, avec 10 convolutions, un diamètre extérieur de 40 mm et un diamètre intérieur de 16 mm, et une raideur de 4,8 daN/mm par convolution, une course x de 6,5 mm et une hauteur nominale Lo de 13 mm,
- le verrou a un diamètre de 5 mm et la lumière a un diamètre de 5,5 mm, la plaque formant coulisseau a une épaisseur de 4 mm.

On a pu vérifier d'un tel dispositif de sécurité résiste à l'application d'une poussée de gaz de 300 bars (même lorsque le canal n'est plus obturé complètement), à un échauffement du milieu environnant jusqu'à 200°C, à l'application de vibrations.

Il va de soi que la description qui précède n'a été proposée qu'à titre d'exemple non limitatif et que de nombreuses variantes peuvent être proposées par l'homme de l'art sans sortir du cadre de l'invention. C'est ainsi en particulier que la lumière destinée à laisser passer le verrou peut être allongée parallèlement à X-X en sorte de permettre le recul du verrou en plusieurs positions. D'autre part, il est possible de prévoir plusieurs ouvertures, adaptées à permettre un fonctionnement en dépression, et un fonctionnement en surpression.

## Revendications

1. Vanne de sécurité (1, 1', 1'') comportant :
- un corps de vanne (2, 2', 2'') dans lequel sont ménagés une chambre cylindrique (3, 3', 3'') ayant un premier axe (X-X), munie d'un fond transversal (10, 10', 10") et communiquant avec l'extérieur du corps par une lumière (11, 11', 11") proche de ce fond, un canal (12, 12', 12") de section constante parallèle au fond transversal, ayant un second axe interceptant au moins approximativement le premier axe, et s'étendant depuis cet axe jusqu'à une portée périphérique (13, 13') orientée vers le premier axe, communiquant au delà de cette partie périphérique avec un orifice d'entrée de gaz (14, 14'), et dans lequel débouche entre cette portée périphérique et le premier axe un canal transversal de sortie de gaz (15, 15'), et un alésage (16, 16', 16") s'étendant parallèlement au premier axe à partir du fond transversal jusqu'au delà du canal,
- une capsule manométrique déformable (4, 4', 4")) formée d'un soufflet (5, 5', 5'') coaxial à la chambre cylindrique et fermé de manière étanche, en enfermant une masse de gaz donnée, par une première bride (6, 6', 6'') fixée dans la chambre cylindrique à distance du fond transversal, et par une seconde bride (7, 7', 7'') en regard de ce fond transversal, mobile parallèlement au premier axe, et auquel est fixé un coulisseau (17, 17', 17") adapté à coulisser dans l'alésage et à empiéter dans au moins une partie prédéterminée de l'intersection alésage/canal pour un premier groupe de positions de la bride mobile dans la chambre et à dégager au contraire cette partie prédéterminée de l'intersection alésage/canal dans au moins une autre position de la bride mobile,
- un verrou (19, 19', 19") s'étendant dans le canal entre la portée périphérique et l'alésage, en étant maintenu par le coulisseau dans une configuration isolant le canal transversal de sortie (15, 15') vis à vis de l'orifice d'entrée de gaz (14, 14'), lorsque la bride mobile est dans l'une des positions dudit premier groupe de positions, ce verrou ayant une extrémité arrière (19A) adaptée par sa forme à pénétrer, lorsque la bride mobile est dans ladite autre position, dans ladite partie prédéterminée de l'intersection alésage/canal sur une distance au moins égale à l'écart entre le canal transversal de sortie de gaz et la portée périphérique.

2. Vanne de sécurité selon la revendication 1, caractérisée en ce que le coulisseau (17, 17') est une plaque transversale au second axe et comportant une lumière (18, 18') adaptée à laisser dégagée ladite partie prédéterminée de l'intersection alésage/canal et à être traversée par l'extrémité arrière du verrou.

3. Vanne de sécurité selon la revendication 2, caractérisée en ce que cette lumière (18, 18') a la même forme et la même section que le canal (12, 12').

4. Vanne de sécurité selon l'une quelconque des revendications 1 à 3, caractérisée en ce que le canal (12, 12') et le verrou (19, 19') et la portée périphérique (13, 13') sont circulaires.

5. Vanne de sécurité selon l'une quelconque des revendications 1 à 4, caractérisée en ce que la bride mobile est, dans ladite autre position laissant dégagée ladite partie prédéterminée de l'intersection alésage/canal, en appui contre le fond transversal (10).

6. Vanne de sécurité selon l'une quelconque des revendications 1 à 4, caractérisée en ce que la bride mobile (7") est, dans ladite autre position laissant dégagée ladite partie prédéterminée de l'intersection alésage/canal, en appui par sa périphérie contre une portée (50) faisant face audit fond.

7. Vanne de sécurité selon la revendication 1, caractérisée en ce que le coulisseau est une plaque pleine (17") adaptée à dégager l'intersection alésage/canal lorsque ladite autre position de la bride mobile est une position rétractée.

8. Vanne de sécurité selon l'une quelconque des revendications 1 à 7, caractérisée en ce que la bride mobile admet, parmi les positions du premier groupe, une position pour laquelle la masse de gaz contenue dans la capsule (4) est à une pression de 1 bar.

9. Vanne de sécurité selon l'une quelconque des revendications 1 à 8, caractérisée en ce qu'une butée (70) est disposée à l'intérieur de la capsule manométrique déformable, entre lesdites brides.

10. Vanne de sécurité selon l'une quelconque des revendications 1 à 9, caractérisée en ce que dans le coulisseau est ménagé un lamage (80) adapté à recevoir, dans l'une des positions du premier groupe, l'extrémité arrière du verrou tout en maintenant l'isolation entre le canal de sortie et l'orifice d'entrée.

11. Dispositif à commande pyrotechnique comportant un élément pyrotechnique (21) muni d'une chambre de génération de gaz (20), une chambre de réception de gaz (27) et, entre ces chambres, une vanne de sécurité (1, 1') comportant :
- un corps de vanne (2') dans lequel sont ménagés une chambre cylindrique (3') ayant un premier axe (X-X), munie d'un fond transversal (10') et communiquant avec l'extérieur du corps par une lumière (11') proche de ce fond, un canal (12') de section constante parallèle au fond transversal, ayant un second axe interceptant au moins approximativement le premier axe, et s'étendant depuis cet axe jusqu'à une portée périphérique (13') orientée vers le premier axe, communiquant au delà de cette partie périphérique avec un orifice d'entrée de gaz, et dans lequel débouche entre cette portée périphérique et le premier axe un canal transversal de sortie de gaz (15'), et un alésage (16') s'étendant parallèlement au premier axe à partir du fond transversal jusqu'au delà du canal,
- une capsule manométrique déformable (4) formée d'un soufflet (5) coaxial à la chambre cylindrique et fermé de manière étanche, en enfermant une masse de gaz donnée, par une première bride (6') fixée dans la chambre cylindrique à distance du fond transversal, et par une seconde bride (7') en regard de ce fond transversal, mobile parallèlement au premier axe, et auquel est fixé un coulisseau (17') adapté à coulisser dans l'alésage et à empiéter dans au moins une partie prédéterminée de l'intersection alésage/canal pour un premier groupe de positions de la bride mobile dans la chambre et à dégager au contraire cette partie prédéterminée de l'intersection alésage/canal dans au moins une autre position de la bride mobile,
- un verrou (19') s'étendant dans le canal entre la portée périphérique et l'alésage, en étant maintenu par le coulisseau dans une configuration isolant le canal transversal de sortie (15') vis à vis de l'orifice d'entrée de gaz (14'), lorsque la bride mobile est dans l'une des positions dudit premier groupe de positions, ce verrou ayant une extrémité arrière adaptée par sa forme à pénétrer, lorsque la bride mobile est dans ladite autre position, dans ladite partie prédéterminée de l'intersection alésage/canal sur une distance au moins égale à l'écart entre le canal transversal de sortie de gaz et la portée périphérique.

12. Dispositif selon la revendication 11, caractérisé en ce que la chambre de réception de gaz est la chambre d'un piston d'éjection.

## Patentansprüche

1. Sicherheitsventil (1, 1', 1"), aufweisend:
- einen Ventilkörper (2, 2', 2"), in dem eine zylindrische Kammer (3, 3', 3") mit einer ersten Achse (X-X), welche Kammer mit einem transversalen Boden (10, 10', 10") versehen ist und mit dem Äußeren des Körpers durch einen Einlaß (11, 11', 11") in der Nähe dieses Bodens in Verbindung steht, ein Kanal (12, 12', 12") mit konstantem Querschnitt parallel zum transversalen Boden, welcher eine zweite Achse hat, die zumindest näherungsweise die erste Achse schneidet, und welcher sich von dieser Achse aus bis zu einer Umfangsfläche (13, 13') erstreckt, die gegen die erste Achse gerichtet ist, wobei er jenseits dieses Umfangsteils mit einer Gaseintrittsöffnung (14, 14') in Verbindung steht, und in welchen zwischen dieser Umfangsfläche und der ersten Achse ein transversaler Gasaustrittskanal (15, 15') mündet, und eine Bohrung (16, 16', 16") angeordnet sind, die sich vom transversalen Boden aus parallel zur ersten Achse bis jenseits des Kanals erstreckt,
- eine deformierbare Manometerkapsel (4, 4', 4"), die aus einem Blasebalg (5, 5', 5"), welcher koaxial zur zylindrischen Kammer ist und dicht verschlossen ist, wodurch er eine gegebene Gasmasse einschließt, aus einem ersten Flansch (6, 6', 6"), der in der zylindrischen Kammer in einem Abstand zum transversalen Boden befestigt ist, und aus einem zweiten Flansch (7, 7', 7") gegenüber diesem transversalen Boden gebildet ist, welcher parallel zur ersten Achse beweglich ist und an welchem ein Läufer (17, 17', 17") befestigt ist, der dafür ausgelegt ist, in der Bohrung zu gleiten und in zumindest einen vorgegebenen Teil der Kreuzung Bohrung/Kanal für eine erste Gruppe von Stellungen des beweglichen Flansches in der Kammer vorzudringen und im Gegenzug diesen vorgegebenen Teil der Kreuzung Bohrung/Kanal in zumindest einer anderen Stellung des beweglichen Flansches freizugeben,
- einen Bolzen (19, 19', 19"), der sich im Kanal zwischen der Umfangsfläche und der Bohrung erstreckt, wobei er durch den Läufer in einer Anordnung gehalten wird, in der der transversale Austrittskanal (15, 15') gegenüber der Gaseintrittsöffnung (14, 14') isoliert ist, wenn der bewegliche Flansch sich in einer der Stellungen der ersten Gruppe von Stellungen befindet, wobei dieser Bolzen ein hinteres Ende (19A) hat, das durch seine Form dafür ausgelegt ist, wenn sich der bewegliche Flansch in der anderen Stellung befindet, in den vorgegebenen Teil der Kreuzung Bohrung/Kanal auf einer Distanz einzudringen, die zumindest gleich dem Abstand zwischen dem transversalen Gasaustrittskanal und der Umfangsfläche ist.

2. Sicherheitsventil nach Anspruch 1, dadurch gekennzeichnet, daß der Läufer (17, 17') eine zur zweiten Achse transversale Platte ist und daß er ein Loch (18, 18') aufweist, das dafür ausgelegt ist, den vorgegebenen Teil der Kreuzung Bohrung/Kanal freizulassen und vom hinteren Ende des Bolzens durchdrungen zu werden.

3. Sicherheitsventil nach Anspruch 2, dadurch gekennzeichnet, daß dieses Loch (18, 18') die gleiche Form und den gleichen Querschnitt wie der Kanal (12, 12') hat.

4. Sicherheitsventil nach einem der Ansprüche 1 bis 3, dadurch gekennzeichnet, daß der Kanal (12, 12') und der Bolzen (19, 19') und die Umfangsfläche (13, 13') kreisförmig sind.

5. Sicherheitsventil nach einem der Ansprüche 1 bis 4, dadurch gekennzeichnet, daß der bewegliche Flansch in der anderen Stellung, in der der vorgegebene Teil der Kreuzung Bohrung/Kanal freigelassen ist, gegen den transversalen Boden (10) gestützt ist.

6. Sicherheitsventil nach einem der Ansprüche 1 bis 4, dadurch gekennzeichnet, daß der bewegliche Flansch (7") in der anderen Stellung, in der der vorgegebene Teil der Kreuzung Bohrung/Kanal freigelassen ist, mit seinem Umfang gegen eine Fläche (50) gestützt ist, die dem Boden gegenüberliegt.

7. Sicherheitsventil nach Anspruch 1, dadurch gekennzeichnet, daß der Läufer eine ebene Platte (17") ist, die dafür ausgelegt ist, die Kreuzung Bohrung/Kanal freizugeben, wenn die andere Stellung des beweglichen Flansches eine eingezogene Stellung ist.

8. Sicherheitsventil nach einem der Ansprüche 1 bis 7, dadurch gekennzeichnet, daß der bewegliche Flansch innerhalb der Stellungen der ersten Gruppe eine Stellung zuläßt, für die die Gasmasse, die in der Kapsel (4) enthalten ist, einen Druck von 1 bar hat.

9. Sicherheitsventil nach einem der Ansprüche 1 bis 8, dadurch gekennzeichnet, daß im Inneren der deformierbaren Manometerkapsel zwischen den Flanschen ein Anschlag (70) angeordnet ist.

10. Sicherheitsventil nach einem der Ansprüche 1 bis 9, dadurch gekennzeichnet, daß der Läufer mit einer Senkung (80) versehen ist, die dafür ausgelegt ist, in einer der Stellungen der ersten Gruppe das hintere Ende des Bolzens aufzunehmen, während die Isolation zwischen dem Austrittskanal und der Eintrittsöffnung aufrechterhalten wird.

11. Vorrichtung mit pyrotechnischem Antrieb, aufweisend ein pyrotechnisches Element (21), das mit einer Gaserzeugungskammer (20), einer Gasaufnahmekammer (27) und, zwischen diesen Kammern, mit einem Sicherheitsventil (1, 1') versehen ist, wobei das Sicherheitsventil folgendes aufweist:
- einen Ventilkörper (2'), in dem eine zylindrische Kammer (3') mit einer ersten Achse (X-X), welche Kammer mit einem transversalen Boden (10') versehen ist und mit dem Äußeren des Körpers durch einen Einlaß (11') in der Nähe dieses Bodens in Verbindung steht, ein Kanal (12') mit konstantem Querschnitt parallel zum transversalen Boden, welcher eine zweite Achse hat, die zumindest näherungsweise die erste Achse schneidet, und welcher sich von dieser Achse aus bis zu einer Umfangsfläche (13') erstreckt, die gegen die erste Achse gerichtet ist, wobei er jenseits dieses Umfangsteils mit einer Gaseintrittsöffnung in Verbindung steht, und in welchen zwischen dieser Umfangsfläche und der ersten Achse ein transversaler Gasaustrittskanal (15') mündet, und eine Bohrung (16') angeordnet sind, die sich vom transversalen Boden aus parallel zur ersten Achse bis jenseits des Kanals erstreckt,
- eine deformierbare Manometerkapsel (4), die aus einem Blasebalg (5), welcher koaxial zur zylindrischen Kammer ist und dicht verschlossen ist, wodurch er eine gegebene Gasmasse einschließt, aus einem ersten Flansch (6'), der in der zylindrischen Kammer in einem Abstand zum transversalen Boden befestigt ist, und aus einem zweiten Flansch (7') gegenüber diesem transversalen Boden gebildet ist, welcher parallel zur ersten Achse beweglich ist und an welchem ein Läufer (17') befestigt ist, der dafür ausgelegt ist, in der Bohrung zu gleiten und in zumindest einen vorgegebenen Teil der Kreuzung Bohrung/Kanal für eine erste Gruppe von Stellungen des beweglichen Flansches in der Kammer vorzudringen und im Gegenzug diesen vorgegebenen Teil der Kreuzung Bohrung/Kanal in zumindest einer anderen Stellung des beweglichen Flansches freizugeben,
- einen Bolzen (19'), der sich im Kanal zwischen der Umfangsfläche und der Bohrung erstreckt, wobei er durch den Läufer in einer Anordnung gehalten wird, in der der transversale Austrittskanal (15') gegenüber der Gaseintrittsöffnung (14') isoliert ist, wenn der bewegliche Flansch sich in einer der Stellungen der ersten Gruppe von Stellungen befindet, wobei dieser Bolzen ein hinteres Ende hat, das durch seine Form dafür ausgelegt ist, wenn sich der bewegliche Flansch in der anderen Stellung befindet, in den vorgegebenen Teil der Kreuzung Bohrung/Kanal auf einer Distanz einzudringen, die zumindest gleich dem Abstand zwischen dem transversalen Gasaustrittskanal und der Umfangsfläche ist.

12. Vorrichtung nach Anspruch 11, dadurch gekennzeichnet, daß die Gasaufnahmekammer die Kammer eines Ausstoßkolbens ist.

## Claims

1. Safety valve (1, 1', 1") including:
- a valve body (2, 2', 2") in which are formed a cylindrical chamber (3, 3', 3") having a first axis (X-X), provided with a transverse end wall (10, 10', 10") and communicating with the exterior of the body via a slot (11, 11', 11") near said end wall, a constant cross-section passage (12, 12', 12") parallel to the transverse end wall, having a second axis at least approximately intercepting the first axis, and extending from said axis to a peripheral bearing surface (13, 13') facing towards the first axis, communicating beyond said peripheral part with a gas inlet orifice (14, 14'), and into which discharges between said peripheral bearing surface and the first axis a transverse gas outlet passage (15, 15'), and a bore (16, 16', 16") extending parallel to the first axis from the transverse end wall beyond the passage,
- a deformable manometric capsule (4, 4', 4") formed of a bellows (5, 5', 5") coaxial with the cylindrical chamber and sealed, enclosing a given mass of gas, by a first flange (6, 6', 6") fixed into the cylindrical chamber at a distance from the transverse end wall, and by a second flange (7, 7', 7") facing said transverse end wall, mobile parallel to the first axis, and to which is fixed a slider (17, 17', 17") adapted to slide in the bore and to nest within at least a predetermined part of the bore/passage intersection for a first group of positions of the mobile flange in the chamber and to be disengaged from this predetermined part of the bore/passage intersection in at least one other position of the mobile flange,
- a bolt (19, 19', 19") extending in the passage between the peripheral bearing surface and the bore, being maintained by the slider in a configuration isolating the transverse outlet passage (15, 15') from the gas inlet orifice (14, 14') when the mobile flange is in one of the positions of said first group of positions, this bolt having a rear end (19A) the shape of which is adapted, when the mobile flange is in said other position, to enter into said predetermined part of the bore/passage intersection to a distance at least equal to the distance between the transverse gas outlet passage and the peripheral bearing surface.

2. Safety valve according to claim 1 characterised in that the slider (17, 17') is a plate transverse to the second axis and incorporating a slot (18, 18') adapted to be disengaged from said predetermined part of the bore/passage intersection and to have the rear end of the bolt pass through it.

3. Safety valve according to claim 2 characterised in that said slot (18, 18') is the same shape and has the same cross-section as the passage (12, 12').

4. Safety valve according to any one of claims 1 to 3 characterised in that the passage (12, 12') and the bolt (19, 19') and the peripheral bearing surface (13, 13') are circular.

5. Safety valve according to any one of claims 1 to 4 characterised in that, in said other position disengaged from said predetermined part of the bore/passage intersection, the mobile flange bears against the transverse end wall (10).

6. Safety valve according to any one of claims 1 to 4 characterised in that, in said other position disengaged from said predetermined part of the bore/passage intersection, the edge of the mobile flange (7") bears against a bearing surface (50) facing said end wall.

7. Safety valve according to claim 1 characterised in that the slider is a solid plate (17") adapted to be disengaged from the bore/passage intersection when said other position of the mobile flange is a retracted position.

8. Safety valve according to any one of claims 1 to 7 characterised in that the mobile flange has, among the positions of the first group, a position in which the mass of gas contained in the capsule (4) is at a pressure of 1 bar.

9. Safety valve according to any one of claims 1 to 8 characterised in that an abutment (70) is disposed inside the deformable manometric capsule, between said flanges.

10. Safety valve according to any one of claims 1 to 9 characterised in that a spot facing (80) is formed in the slider to receive, in one of the positions of the first group, the rear end of the bolt whilst maintaining the isolation between the outlet passage and the inlet orifice.

11. Pyrotechnic control device including a pyrotechnic member (21) having a gas generation chamber (20), a gas receiving chamber (27) and a safety valve (1, 1') between said chambers, including:
- a valve body (2') in which are formed a cylindrical chamber (3') having a first axis (X-X), provided with a transverse end wall (10') and communicating with the exterior of the body via a slot (11') near said end wall, a constant cross-section passage (12') parallel to the transverse end wall, having a second axis at least approximately intercepting the first axis, and extending from said axis to a peripheral bearing surface (13') facing towards the first axis, communicating beyond said peripheral part with a gas inlet orifice, and into which discharges between said peripheral bearing surface and the first axis a transverse gas outlet passage (15'), and a bore (16') extending parallel to the first axis from the transverse end wall beyond the passage,
- a deformable manometric capsule (4) formed of a bellows (5) coaxial with the cylindrical chamber and sealed, enclosing a given mass of gas, by a first flange (6') fixed into the cylindrical chamber at a distance from the transverse end wall, and by a second flange (7') facing said transverse end wall, mobile parallel to the first axis, and to which is fixed a slider (17') adapted to slide in the bore and to nest within at least a predetermined part of the bore/passage intersection for a first group of positions of the mobile flange in the chamber and to be disengaged from this predetermined part of the bore/passage intersection in at least one other position of the mobile flange,
- a bolt (19') extending in the passage between the peripheral bearing surface and the bore, being maintained by the slider in a configuration isolating the transverse outlet passage (15') from the gas inlet orifice (14') when the mobile flange is in one of the positions of said first group of positions, this bolt having a rear end the shape of which is adapted, when the mobile flange is in said other position, to enter into said predetermined part of the bore/passage intersection to a distance at least equal to the distance between the transverse gas outlet passage and the peripheral bearing surface.

12. Device according to claim 11 characterised in that the gas receiving chamber is the chamber of an ejector piston.
